# EUROPEAN PATENT APPLICATION

(11) **EP 3 890 178 A1**
(43) Date of publication of application: **06.10.2021**
(21) Application number: 20275074.1
(22) Date of filing: 02.04.2020
(51) Int. Cl.: H02M 7/483, H02M 1/32, H02M 7/49

(54) **IMPROVEMENTS IN OR RELATING TO CHAIN-LINK CONVERTERS**

(71) Applicant: General Electric Technology GmbH, 5400 Baden (CH)
(72) Inventor: Brehaut, Stephane Pierre, 91300 Ile-de-France (FR); De Preville, Guillaume, 91300 Ile-de-France (FR)
(74) Representative: Potter Clarkson

(57) **Abstract**

In the field of chain-link converters operable to provide a stepped variable voltage source, there is a need for an improved method of operating such a chain-link converter.

A method (10) of operating a chain-link converter, the chain-link converter including a plurality of series connected chain-link modules (12), each chain-link module including at least one switching element and an energy storage device which together are selectively operable to provide a voltage source whereby the chain-link converter is able to provide a stepped variable voltage source, comprises the steps of:
(i) identifying (14) one or more unhealthy chain-link modules having a reduced performance characteristic compared to one or more healthy chain-link modules having a normal performance characteristic;
(ii) utilising (16) the healthy chain-link modules normally in the operation of the chain-link converter; and
(iii) reducing (18) the utilisation of the or each unhealthy chain-link module.

## Description

This invention relates to a method of operating a chain-link converter, the chain-link converter including a plurality of series connected chain-link modules, each chain-link module including at least one switching element and an energy storage device which together are selectively operable to provide a voltage source whereby the chain-link converter is able to provide a stepped variable voltage source. In addition, the invention relates to a controller for a chain-link converter, and to a computer program configured to perform the aforementioned method.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power is also transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to effect the required conversion from AC to DC or from DC to AC.

One type of power converter is a voltage source converter, although other types of power converter are also possible.

Such a voltage source converter includes first and second DC terminals between which extends at least one converter limb, and typically three converter limbs each of which corresponds to a given phase of a three-phase electrical power system.

The or each converter limb includes first and second limb portions which are separated by an AC terminal.

In use the first and second DC terminals are connected to a DC network, and the or each AC terminal is connected to a corresponding phase of an AC network.

Each limb portion includes a chain-link converter which extends between the associated AC terminal and a corresponding one of the first or the second DC terminal. Each chain-link converter includes a plurality of series connected chain-link modules, while each chain-link module includes a number of switching elements which are connected in parallel with an energy storage device, usually in the form of a capacitor. Other types of energy storage device, i.e. any device that is capable of storing and releasing energy to selectively provide a voltage, e.g. a fuel cell or battery, may also be used however.

The provision of a plurality of chain-link modules means that it is possible to build up a combined voltage across each chain-link converter, via the insertion of the energy storage devices, i.e. the capacitors, of multiple chain-link modules (with each chain-link module providing its own voltage), which is higher than the voltage available from each individual chain-link module.

Accordingly, each of the chain-link modules work together to permit the chain-link converter to provide a stepped variable voltage source. This permits the generation of a voltage waveform across each chain-link converter using a step-wise approximation. As such each chain-link converter is capable of providing a wide range of complex waveforms.

For example, operation of each chain-link converter in the foregoing manner can be used to generate an AC voltage waveform at the or each AC terminal, and thereby enable the voltage source converter to provide the aforementioned power transfer functionality between the AC and DC networks.

According to a first aspect of the invention there is provided a method of operating a chain-link converter, the chain-link converter including a plurality of series connected chain-link modules, each chain-link module including at least one switching element and an energy storage device which together are selectively operable to provide a voltage source whereby the chain-link converter is able to provide a stepped variable voltage source, the method comprising the steps of:
(i) identifying one or more unhealthy chain-link modules having a reduced performance characteristic compared to one or more healthy chain-link modules having a normal performance characteristic;
(ii) utilising the healthy chain-link modules normally in the operation of the chain-link converter; and
(iii) reducing the utilisation of the or each unhealthy chain-link module.

Reducing the utilisation of the or each unhealthy chain-link module is beneficial because it increases the service lifetime of the unhealthy chain-link module by reducing the commutation frequency of the unhealthy chain-link module, i.e. reducing the rate at which the unhealthy chain-link module is switched on and off, reducing the conduction losses generated by the unhealthy chain-link module, and reducing the fatigue experienced by the or each associated switching element within the unhealthy chain-link module.

In addition, reducing the utilisation of the or each unhealthy chain-link module decreases the likelihood of high temperature hotspots developing within the chain-link converter because of such unhealthy chain-link modules otherwise having high commutation frequencies and thereby running hot. High temperature hotspots being less likely is desirable because such hotspots can adversely impact or degrade the service lifetime of adjacent, otherwise healthy, chain-link modules.

In a preferred embodiment of the invention step (i) of identifying one or more unhealthy chain-link modules includes further categorising the or each unhealthy chain-link module according to the nature of its unhealthiness.

Further categorising the nature of the unhealthiness of the or each unhealthy chain-link module is advantageous because it allows the reduction in the utilisation of the said unhealthy chain-link module to be tailored according to the degree or extent of unhealthiness.

Optionally, further categorising the or each unhealthy chain-link module according to the nature of its unhealthiness includes identifying a temporarily unhealthy chain-link module.

One or more chain-link modules may have a reduced performance characteristic because they are over temperature but this may subside with time, e.g. as a switching element therein cools down or the ambient temperature reduces depending on the weather or season, such that the or each unhealthy chain-link module regains a normal performance characteristic and so can be considered healthy. Capturing and identifying such chain-link modules that may return to a healthy condition is therefore advantageous so that they can be fully utilised in due course.

Preferably, further categorising the or each unhealthy chain-link module according to the nature of its unhealthiness includes identifying a permanently unhealthy chain-link module. The performance characteristic of a chain-link module may be reduced because the energy storage device therein is degraded. Such a defect will not naturally correct or improve over time, so the chain-link module will be permanently affected. Nevertheless, such a chain-link module can still be used, e.g. to provide temporary relief to other chain-link modules, and so it is beneficial to categorise it in the foregoing manner.

Further categorising the or each unhealthy chain-link module according to the nature of its unhealthiness may include identifying a permanently broken chain-link module.

A permanently broken chain-link module will remain so (until repaired) and is unable to selectively provide a voltage source. As a result, it is advantageous to categorise such broken chain-link modules so that they can be dealt with accordingly during subsequent operation of the chain-link converter.

In another preferred embodiment of the invention the or each chain-link module identified as being permanently broken is no longer utilised in the operation of the chain-link converter.

Avoiding the use of the or each permanently broken chain-link module reduces the risk of having to take the associated chain-link converter offline, e.g. because of a catastrophic short circuit or fire within the or each said permanently broken chain-link module.

Preferably, reducing the utilisation of the or each unhealthy chain-link module includes one or more of:
limiting the commutation frequency of the or each unhealthy chain-link module;
limiting the magnitude of the voltage source the or each unhealthy chain-link module is required to provide;
limiting the magnitude of current directed through the or each unhealthy chain-link module; and
limiting the power level the or each unhealthy chain-link module is exposed to.

Optionally, reducing the utilisation of the or each unhealthy chain-link module includes isolating the or each unhealthy chain-link module for a limited period of time.

Each of the foregoing, either alone or together, reduces the duty cycle of the or each unhealthy chain-link module, and so helps to increase the service lifetime of each such chain-link module.

The method may further comprise, after reducing the utilisation of the or each unhealthy chain-link module identified as being permanently unhealthy, repeating the step of categorising the or each unhealthy chain-link module according to the nature of its unhealthiness.

Repeating such a step at the aforementioned point in the operation of the chain-link converter, usefully provides the opportunity to identify any permanently unhealthy chain-link modules that may have degraded further to the extent that they become permanently broken and so should be recategorized.

Another preferred embodiment of the invention further comprises, after reducing the utilisation of the or each unhealthy chain-link module identified as being temporarily unhealthy, the step of checking whether the or each temporarily unhealthy chain-link module has regained a normal performance characteristic and thereafter reclassifying any such chain-link module as a healthy chain-link module.

Reclassifying a temporarily unhealthy chain-link module as a healthy chain-link module is beneficial since it means that the said reclassified chain-link module can be utilised normally within the chain-link converter, thereby reducing the burden on the remaining healthy chain-link converters.

Optionally the method of the invention comprises the step of categorising again the or each temporarily unhealthy chain-link module, not reclassified as a healthy chain-link module, according to the nature of its unhealthiness.

Repeating the step of categorising the or each remaining temporarily unhealthy chain-link module, according to the nature of its unhealthiness, usefully provides the opportunity to identify any unhealthy chain-link modules that may have deteriorated to the extent that they have become permanently unhealthy, or even permanently broken, such that they should be recategorized in order that they are subsequently dealt with accordingly.

According to a second aspect of the invention there is provided a controller for a chain-link converter, the chain-link converter including a plurality of series connected chain-link modules, each chain-link module including at least one switching element and an energy storage device which together are selectively operable to provide a voltage source whereby the chain-link converter is able to provide a stepped variable voltage source, the controller being configured to:
(i) identify one or more unhealthy chain-link modules having a reduced performance characteristic compared to one or more healthy chain-link modules having a normal performance characteristic;
(ii) utilise the healthy chain-link modules normally in the operation of the chain-link converter; and
(iii) reduce the utilisation of the or each unhealthy chain-link module.

According to a third aspect of the invention there is provided a computer program configured to perform the method described hereinabove.

The second and third aspects of the invention share the advantages associated with the corresponding steps and features of the method of the invention.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

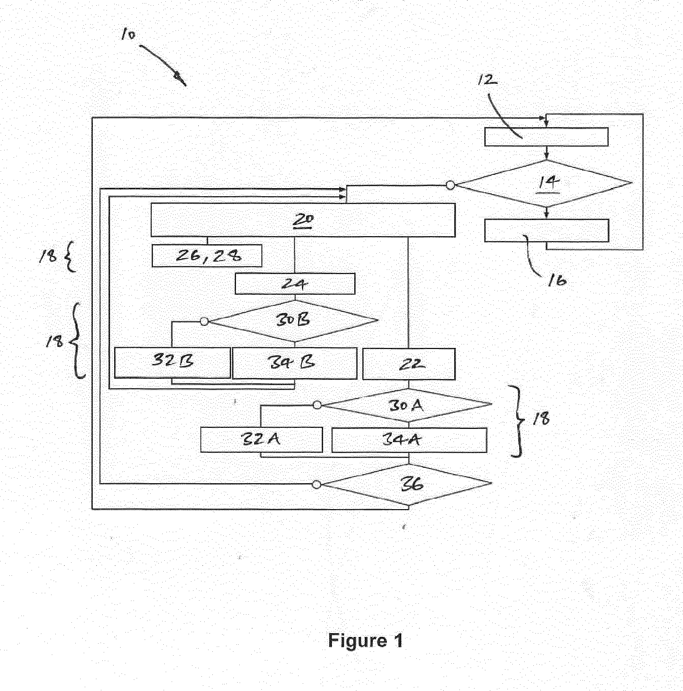

There now follows a brief description of preferred embodiments of the invention, by way of non-limiting example, with reference being made to Figure 1 which shows a flow chart illustrating one embodiment of the method of the invention.

A method 10 of operating a chain-link converter according to an embodiment of the invention is illustrated schematically in a flow chart, as shown in Figure 1.

For completeness, it should be noted that the chain-link converter (not shown) includes a plurality of series connected chain-link modules 12, each of which chain-link module includes at least one switching element and an energy storage device which together are selectively operable to provide a voltage source, whereby the chain-link converter is able to provide a stepped variable voltage source.

More particularly, each chain-link module includes a number of switching elements which are connected in parallel with an energy storage device in the form of a capacitor. Other types of energy storage device, i.e. any device that is capable of storing and releasing energy to selectively provide a voltage, e.g. a fuel cell or battery, may also be used however.

Each switching element includes a semiconductor device, typically in the form of an Insulated Gate Bipolar Transistor (IGBT).

It is, however, possible to use other types of self-commutated semiconductor devices, such as a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. In addition, one or more of the semiconductor devices 34 may instead include a wide-bandgap material such as, but not limited to, silicon carbide, boron nitride, gallium nitride and aluminium nitride.

The number of semiconductor devices in each switching element may vary depending on the required voltage and current ratings of that switching element.

Each of the switching elements also includes a passive current check element that is connected in anti-parallel with a corresponding semiconductor device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

A first exemplary chain-link module may include a first pair of switching elements that is connected in parallel with a capacitor in a known half-bridge arrangement to define a 2-quadrant unipolar module. Switching of the switching elements selectively directs current through the capacitor or causes current to bypass the capacitor, such that the first exemplary chain-link module can provide zero or positive voltage and can conduct current in two directions.

A second exemplary chain-link module may include first and second pairs of switching elements and a capacitor that are connected in a known full bridge arrangement to define a 4-quadrant bipolar module. In a similar manner to the first exemplary chain-link module, switching of the switching elements again selectively directs current through the capacitor or causes current to bypass the capacitor such that the second exemplary chain-link module can provide zero, positive or negative voltage and can conduct current in two directions.

The chain-link converter may include solely first exemplary chain-link modules, solely second exemplary chain-link modules, or a combination of first and second exemplary chain-link modules.

In any event, the provision of a plurality of chain-link modules means that it is possible to build up a combined voltage across each chain-link converter, via the insertion of the energy storage devices, i.e. the capacitors, of multiple chain-link modules (with each chain-link module providing its own voltage), which is higher than the voltage available from each individual chain-link module.

Accordingly, each of the chain-link modules work together to permit the chain-link converter to provide a stepped variable voltage source. This permits the generation of a voltage waveform across each chain-link converter using a step-wise approximation. As such each chain-link converter is capable of providing a wide range of complex waveforms.

Returning to the method 10 of the invention, it comprises the steps of:
(i) identifying 14 one or more unhealthy chain-link modules which have a reduced performance characteristic compared to one or more healthy chain-link modules that have a normal performance characteristic;
(ii) utilising 16 the healthy chain-link modules normally in the operation of the chain-link converter; and
(iii) reducing the utilisation 18 of the or each unhealthy chain-link module.

One way in which one or more unhealthy chain-link modules, i.e. one or more faulty chain-link modules, may be identified is by the known steps of:
- measuring a switching characteristic of each chain-link module of a chain-link converter;
- establishing a switching characteristic signature of the chain-link converter; and
- identifying the or each chain-link module with a switching characteristic that deviates from the switching characteristic signature as being a faulty chain-link module.

Other ways of identifying one or more unhealthy chain-link modules may be used, however.

In any event, in the method 10 of the invention, step (i) of identifying one or more unhealthy chain-link modules includes further categorising 20 the or each unhealthy chain-link module according to the nature of its unhealthiness.

In particular, this might be done based on one or more of the following, non-exhaustive, considerations:
- the health of the energy storage device, i.e. the capacitor, in a given chain-link module;
- the temperature of the semiconductor devices, e.g. IGBTs, or diodes therein;
- the power supply condition for a given chain-link module;
- the condition of the gate drivers for the semiconductor devices, e.g. IGBTs;
- rapid discharge conditions; and/or
- mechanical bypass conditions.

In the embodiment of the method 10 described herein, further categorising 20 the or each unhealthy chain-link module according to the nature of its unhealthiness includes identifying one or more temporarily unhealthy 22 chain-link modules.

In addition, further categorising 20 the or each unhealthy chain-link module according to the nature of its unhealthiness includes identifying one or more permanently unhealthy 24 chain-link modules.

Further categorising 20 the or each unhealthy chain-link module according to the nature of its unhealthiness also includes identifying one or more permanently broken 26 chain-link modules, with any such chain-link modules identified as being permanently broken no longer being utilised 28 in the operation of the chain-link converter.

Meanwhile in the embodiment of the method 10 described herein, step (iii) of reducing the utilisation 18 of the or each unhealthy chain-link module includes a combination of:
- limiting the commutation frequency of the or each unhealthy chain-link module, i.e. limiting the commutation frequency 30A of the or each temporarily unhealthy chain-link module, and limiting the commutation frequency 30B of the or each permanently unhealthy chain-link module; and
- isolating the or each unhealthy chain-link module for a limited period of time, i.e. isolating 32A the or each temporarily unhealthy chain-link module for a limited period of time, and isolating 32B the or each permanently unhealthy chain-link module for a limited period of time.

Notwithstanding the foregoing reduction 18 in utilisation of the or each unhealthy chain-link module, these chain-link modules are nevertheless still utilised to some degree in the ongoing operation of the associated chain-link converter, i.e. the or each temporarily unhealthy chain-link module is still utilised 34A and the or each permanently unhealthy chain-link module is still utilised 34B.

Other ways in which the utilisation of the or each unhealthy chain-link module may be reduced include:
limiting the magnitude of the voltage source the or each unhealthy chain-link module is required to provide;
limiting the magnitude of current directed through the or each unhealthy chain-link module; and
limiting the power level the or each unhealthy chain-link module is exposed to.

With respect to the or each unhealthy chain-link module identified as being permanently unhealthy, after the step of reducing their utilisation 18, the method 10 of the invention repeats the step of categorising 20 the or each unhealthy chain-link module according to the nature of its unhealthiness.

Repeating such a step provides the opportunity to identify any permanently unhealthy chain-link modules that may have degraded further to the extent that they become permanently broken and so should be recategorized.

At the same time, with respect to the or each unhealthy chain-link module identified as being temporarily unhealthy, after the step of reducing their utilisation 18, the method 10 of the invention includes the step of checking 36 whether the or each temporarily unhealthy chain-link module has regained a normal performance characteristic and thereafter reclassifying any such chain-link module as a healthy chain-link module.

Reclassifying a temporarily unhealthy chain-link module as a healthy chain-link module means that it can be utilised normally 16 within the chain-link converter.

Meanwhile according to the method 10 of the invention, the or each temporarily unhealthy chain-link module which is not reclassified as a healthy chain-link module, again goes through the step of being categorised 20 according to the nature of its unhealthiness.

Thus, the method 10 of the invention identifies any unhealthy chain-link modules that may have deteriorated to the extent that they have become permanently unhealthy, or even permanently broken, such that they can be recategorized in order that they are subsequently dealt with accordingly.

A controller (not shown) for a chain-link converter, according to a further embodiment of the invention, is configured to:
(i) identify 14 one or more unhealthy chain-link modules having a reduced performance characteristic compared to one or more healthy chain-link modules having a normal performance characteristic;
(ii) utilise 16 the healthy chain-link modules normally in the operation of the chain-link converter; and
(iii) reduce the utilisation 18 of the or each unhealthy chain-link module.

A computer program (also not shown), according to a still further embodiment of the invention, is configured to perform the method 10 described hereinabove.

## Claims

1. A method (10) of operating a chain-link converter, the chain-link converter including a plurality of series connected chain-link modules (12), each chain-link module including at least one switching element and an energy storage device which together are selectively operable to provide a voltage source whereby the chain-link converter is able to provide a stepped variable voltage source, the method (10) comprising the steps of:
(i) identifying (14) one or more unhealthy chain-link modules having a reduced performance characteristic compared to one or more healthy chain-link modules having a normal performance characteristic;
(ii) utilising (16) the healthy chain-link modules normally in the operation of the chain-link converter; and
(iii) reducing (18) the utilisation of the or each unhealthy chain-link module.

2. A method (10) of operating a chain-link converter according to Claim 1 wherein step (i) of identifying (14) one or more unhealthy chain-link modules includes further categorising (20) the or each unhealthy chain-link module according to the nature of its unhealthiness.

3. A method (10) of operating a chain-link converter according to Claim 2 wherein further categorising (20) the or each unhealthy chain-link module according to the nature of its unhealthiness includes identifying a temporarily unhealthy (22) chain-link module.

4. A method (10) of operating a chain-link converter according to Claim 2 or Claim 3 wherein further categorising (20) the or each unhealthy chain-link module according to the nature of its unhealthiness includes identifying a permanently unhealthy (24) chain-link module.

5. A method (10) of operating a chain-link converter according to any of Claims 2 to 4 wherein further categorising (20) the or each unhealthy chain-link module according to the nature of its unhealthiness includes identifying a permanently broken (26) chain-link module.

6. A method (10) of operating a chain-link converter according to Claim 5 wherein the or each chain-link module identified as being permanently broken is no longer utilised (28) in the operation of the chain-link converter.

7. A method (10) of operating a chain-link converter according to any of Claims 2 to 4 wherein reducing the utilisation (18) of the or each unhealthy chain-link module includes one or more of:
limiting the commutation frequency (30A, 30B) of the or each unhealthy chain-link module;
limiting the magnitude of the voltage source the or each unhealthy chain-link module is required to provide;
limiting the magnitude of current directed through the or each unhealthy chain-link module; and
limiting the power level the or each unhealthy chain-link module is exposed to.

8. A method (10) of operating a chain-link converter according to any of Claims 2 to 4 or 7 wherein reducing the utilisation (18) of the or each unhealthy chain-link module includes isolating (30A, 30B) the or each unhealthy chain-link module for a limited period of time.

9. A method (10) of operating a chain-link converter according to Claim 7 or Claim 8 further comprising, after reducing the utilisation (18) of the or each unhealthy chain-link module identified as being permanently unhealthy, repeating the step of categorising (20) the or each unhealthy chain-link module according to the nature of its unhealthiness.

10. A method (10) of operating a chain-link converter according to any of Claims 7 to 9 further comprising, after reducing the utilisation (18) of the or each unhealthy chain-link module identified as being temporarily unhealthy, the step of checking (36) whether the or each temporarily unhealthy chain-link module has regained a normal performance characteristic and thereafter reclassifying any such chain-link module as a healthy chain-link module.

11. A method (10) of operating a chain-link converter according to Claim 10 comprising the step of categorising (20) again the or each temporarily unhealthy chain-link module, not reclassified as a healthy chain-link module, according to the nature of its unhealthiness.

12. A controller for a chain-link converter, the chain-link converter including a plurality of series connected chain-link modules, each chain-link module including at least one switching element and an energy storage device which together are selectively operable to provide a voltage source whereby the chain-link converter is able to provide a stepped variable voltage source, the controller being configured to:
(i) identify (14) one or more unhealthy chain-link modules having a reduced performance characteristic compared to one or more healthy chain-link modules having a normal performance characteristic;
(ii) utilise (16) the healthy chain-link modules normally in the operation of the chain-link converter; and
(iii) reduce the utilisation (18) of the or each unhealthy chain-link module.

13. A computer program configured to perform the method of any of Claims 1 to 11.
